# FASCICULE DE BREVET EUROPEEN

(11) **EP 2 032 294 B1**
(45) Date de publication et mention de la délivrance du brevet: **29.09.2010**
(21) Numéro de dépôt: 07803762.9
(22) Date de dépôt: 20.06.2007
(51) Int. Cl.: B23B 29/12, B23B 45/00, F16C 33/58, F16C 33/60, F16C 19/04, F16C 19/10, F16C 19/18

(54) **ROULEMENT A BAGUE, A DEPLACEMENT AXIAL ET OUTILLAGE DE FACONNAGE EQUIPE D'UN TEL ROULEMENT**
RINGWALZENLAGER MIT AXIALVERSCHIEBUNG UND FORMWERKZEUG MIT DERARTIGEM LAGER
RING-ROLLING BEARING WITH AXIAL DISPLACEMENT AND SHAPING TOOLING EQUIPPED WITH SUCH A BEARING

(30) Priorité: 26.06.2006 FR 0605673
(43) Date de publication de la demande: 11.03.2009
(73) Titulaire: Peigne, Grégoire, 92310 Sevres (FR)
(72) Inventeur: Peigne, Grégoire, 92310 Sevres (FR)
(74) Mandataire: Tanty, François
(86) Numéro de dépôt international: PCT/FR2007/001024
(87) Numéro de publication internationale: WO 2008/000935

(56) Documents cités:
- DE-A1- 2 345 866
- DE-A1- 2 436 340
- SU-A2- 1 161 258
- US-A- 3 443 446
- US-A- 5 116 147

## Description

La présente invention concerne un roulement, de préférence à billes, organisé autour d'un axe de rotation, ledit roulement comprenant au moins une première bague délimitant une première surface de roulement et une deuxième bague délimitant une deuxième surface de roulement, lesdites bagues étant coaxiales audit axe de rotation et animées d'un mouvement relatif de rotation, au moins une rangée d'organes de roulement, tels que des billes, montés à contact roulant entre les surfaces de roulement respectives prévues sur lesdites bagues, lesdits organes de roulement étant généralement insérés dans une cage pour les maintenir entre eux selon un écart angulaire prédéterminé, la première surface de roulement constituant un chemin à profil ondulé, de préférence sinusoïdal, pour conférer, en régime constant de fonctionnement, un mouvement alternatif axial desdites première et deuxième bagues entre elles, ainsi qu'un outillage de façonnage, tel que usinage, fraisage, perçage du type comprenant un porte-outil entraîné en action par un bloc moteur, ledit outillage intégrant au moins un roulement du type précité.

Un tel roulement, selon le préambule de la revendication 1, est connu du document DE 2345866 A.

La réalisation d'un roulement apte à transformer un mouvement de rotation en un mouvement alternatif axial ou de va-et-vient est d'ores et déjà connue à ceux versés dans cet art.

Ainsi, le document US 3.443.446 propose un outillage intégrant un roulement à deux rangées d'organes de roulement, monté entre un boîtier et un arbre d'entraînement en rotation, ce roulement permettant d'animer d'un mouvement alternatif axial le boîtier par rapport à l'arbre. Dans cette solution une collerette est liée en rotation avec l'arbre et disposée entre chaque rangée d'organes de roulement. Cette collerette présente en vis-à-vis de chaque rangée d'organes de roulement une surface de roulement en forme de vague. Il est également prévu deux bagues, fixées au boîtier, qui sont pourvues chacune d'une surface de roulement en forme de vague également pour permettre aux organes de roulement de suivre la forme en vague de la collerette. Cette solution technique permet bien d'avoir un déplacement alternatif axial du boîtier par rapport à l'arbre, mais l'amplitude de ce déplacement alternatif axial n'est pas réglable.

Le document US 5.116.147 décrit un outillage qui comporte un système de roulement anti-bloquant. Dans ce système de roulement, les surfaces de roulement intérieure et extérieure des organes de roulement sont en dents de scie pour générer des vibrations et éviter ainsi le blocage des pièces de l'outillage qui sont en rotation l'une par rapport à l'autre. Mais, il n'y a aucune possibilité de réglage de l'amplitude de ces vibrations.

De la même manière, des outillages intégrant un roulement permettant d'animer un porte-outil d'un mouvement alternatif à amplitude réglable sont déjà connus à ceux versés dans cet art, comme l'illustre en particulier le brevet SU-1.161.258.

Le fait d'animer un porte-outil en parallèle de son mouvement de rotation d'un mouvement alternatif présente un certain nombre d'avantages, en particulier dans le cas d'une application à l'usinage, et plus particulièrement au perçage assisté par des vibrations à basse fréquence.

Les avantages de ce déplacement alternatif sont les suivants, à savoir une évacuation aisée des copeaux fragmentés en petite taille par les vibrations, une réduction de la puissance de coupe, une réduction de l'échauffement du foret minimisant le besoin de lubrifiant et permettant l'augmentation de la productivité par l'amélioration des conditions de coupe.

L'inconvénient de la solution développée dans le brevet SU-1.161.258 réside dans le fait que la variation de l'amplitude du mouvement alternatif axial engendre nécessairement une modification de la fréquence du mouvement alternatif, modification non souhaitée par l'opérateur. En outre, le roulement est un roulement dédié à l'application choisie difficilement transposable à une autre application.

Un but de la présente invention est donc de proposer un roulement dont la conception permet de régler aisément l'amplitude du mouvement alternatif des bagues dudit roulement sans faire varier la fréquence du mouvement axial transmis.

Un autre but de la présente invention est de proposer un outillage intégrant un roulement du type précité dont la conception permet un réglage aisé de l'amplitude du mouvement axial de va-et-vient de l'outil sans faire varier la fréquence du mouvement de l'outil.

A cet effet, l'invention a pour objet un roulement, de préférence à billes, organisé autour d'un axe de rotation, ledit roulement comprenant au moins une première bague délimitant une première surface de roulement et une deuxième bague délimitant une deuxième surface de roulement, coaxiales audit axe de rotation et animées d'un mouvement relatif de rotation, au moins une rangée d'organes de roulement, tels que des billes, montés à contact roulant entre les surfaces de roulement respectives prévues sur lesdites bagues, lesdits organes de roulement étant généralement insérés dans une cage pour les maintenir entre eux selon un écart angulaire prédéterminé, la première surface de roulement constituant un chemin à profil ondulé, de préférence sinusoïdal, pour conférer, en régime constant de fonctionnement, un mouvement alternatif axial desdites première et deuxième bagues entre elles, **caractérisé en ce qu**'il comporte au moins une troisième surface de roulement constituant un chemin à profil ondulé ménagée sur une troisième bague, coaxiale auxdites première et deuxième bagues, cette troisième surface de roulement à profil ondulé, ménagée sur la troisième bague, coopérant soit avec la rangée, dite première rangée d'organes de roulement en contact avec la première surface de roulement, soit avec une seconde rangée d'organes de roulement maintenus entre eux à l'aide d'une cage de préférence solidaire en rotation de la cage renfermant la première rangée d'organes de roulement, cette seconde rangée d'organes de roulement étant insérée entre ladite troisième surface de roulement de la troisième bague et une quatrième surface de roulement d'une quatrième bague, au moins l'une des troisième ou quatrième bagues étant montée solidaire en rotation, en régime constant de fonctionnement, respectivement de la première ou de la deuxième bague et les ou deux des bagues solidaires en rotation, à savoir la première et la troisième bague ou la deuxième et la quatrième bague, étant montées mobiles axialement l'une par rapport à l'autre pour pouvoir être animées d'un mouvement relatif alternatif axial, la position angulaire relative des première et troisième bagues équipées des surfaces de roulement à profil ondulé déterminant, en coopération avec les organes de roulement, l'amplitude des mouvements axiaux des bagues solidaires en rotation et animées entre elles d'un mouvement alternatif axial.

Il doit être noté que par régime constant de fonctionnement, on entend les phases de fonctionnement du roulement pendant lesquelles l'amplitude du mouvement alternatif axial des bagues est constante.

Le principe est donc de pouvoir, à l'aide d'un même roulement, générer un mouvement alternatif axial, d'amplitude réglable, en superposant deux mouvements alternatifs axiaux d'amplitude fixe et de même fréquence générés chacun à l'aide d'une surface de roulement constituant un chemin à profil ondulé, le réglage de l'amplitude étant obtenu en modifiant le déphasage entre les deux mouvements et la fréquence des oscillations étant donnée par le nombre de périodes des surfaces de roulement ondulées et la vitesse de rotation suivant l'axe du roulement des organes de roulement par rapport à ces surfaces. Ainsi, au moins deux bagues du roulement possèdent une surface de roulement constituant un chemin à profil ondulé, de préférence périodique et sinusoïdal, qui permet à chacune des deux bagues, par coopération avec les organes de roulement, d'être animée d'un mouvement relatif alternatif axial, dit mouvement élémentaire, par rapport au plan contenant le centre des organes de roulement, ces deux mouvements élémentaires s'ajoutant pour imprimer entre ces deux bagues un mouvement de va-et-vient axial d'amplitude réglable, l'amplitude étant fonction du déphasage entre les mouvements élémentaires.

Selon une caractéristique de l'invention, les surfaces de roulement à profil ondulé des première et troisième bagues, dites bagues à profil ondulé, sont tournées vers la surface de roulement, exempte de profil ondulé, de la deuxième ou des deuxième et quatrième bagues, dite(s) bague(s) lisse(s), ces première et troisième bagues à surface de roulement à profil ondulé formant, soit les bagues intérieures dudit roulement, soit les bagues extérieures dudit roulement.

Pour permettre un réglage de l'amplitude du mouvement axial transmis, la position angulaire relative des première et troisième bagues, équipées de surface de roulement à profil ondulé est réglable par déplacement angulaire desdites bagues l'une par rapport à l'autre autour de l'axe de rotation du roulement, lesdites bagues étant maintenues dans la position choisie par des moyens appropriés, tels que des moyens de rappel, de préférence élastique.

Ce déplacement angulaire peut être commandé manuellement ou automatiquement. Dans un mode de réalisation préféré, les bagues, équipées de surface de roulement à profil ondulé, sont déplaçables angulairement l'une par rapport à l'autre et sont reliées par l'intermédiaire d'un mécanisme motorisé d'entraînement en rotation de l'une des bagues par rapport à l'autre en vue de permettre le réglage de l'amplitude des mouvements axiaux transmis.

Dans un autre mode de réalisation, les première et troisième bagues, équipées de surface de roulement à profil ondulé, sont déplaçables, de préférence manuellement, angulairement l'une par rapport à l'autre et l'une des bagues, équipée d'une surface de roulement à profil ondulé, comporte des repères visuels de sa position angulaire, soit par rapport à l'autre bague équipée d'une surface de roulement à profil ondulé, soit par rapport à une référence externe audit roulement à laquelle le roulement est couplé.

Bien évidemment, l'amplitude peut également être réglée de manière définitive au moment de la construction du roulement par le choix du décalage angulaire entre les bagues.

Selon un autre mode de réalisation de l'invention, le roulement comporte deux rangées d'organes de roulement et deux des bagues solidaires en rotation sont réalisées d'une seule pièce.

Dans encore un autre mode de réalisation de l'invention, le roulement comporte au moins quatre bagues et deux cages d'organes de roulement déplaçables angulairement l'une par rapport à l'autre en vue de permettre le réglage de l'amplitude des mouvements axiaux transmis.

L'invention a encore pour objet un outillage de façonnage, tel que perçage, fraisage, usinage, du type comprenant un porte-outil entraîné en rotation par un bloc moteur dont il est solidaire en rotation, **caractérisé en ce que** le porte-outil est animé par rapport au bloc moteur d'un mouvement alternatif axial à amplitude réglable indépendamment de la fréquence par l'intermédiaire d'un roulement du type précité, interposé entre bloc moteur et porte-outil.

L'invention sera bien comprise à la lecture de la description suivante d'exemples de réalisation, en référence aux dessins annexés dans lesquels :
la figure 1 représente une vue en perspective d'ensemble d'un roulement conforme à l'invention ;
la figure 2 représente une vue en coupe du roulement à trois bagues de la figure 1 ;
la figure 3 représente une vue en perspective d'une surface de roulement constituant un chemin de roulement à profil ondulé;
la figure 4 représente une vue en coupe d'un roulement à quatre bagues et deux rangées d'organes de roulement ;
la figure 5 représente une vue en coupe d'un porte-outil équipé de moyens de réglage manuel de l'amplitude du mouvement axial transmis et
la figure 6 représente une vue en coupe d'un porte-outil équipé de moyens de réglage automatisé de l'amplitude du mouvement axial transmis.

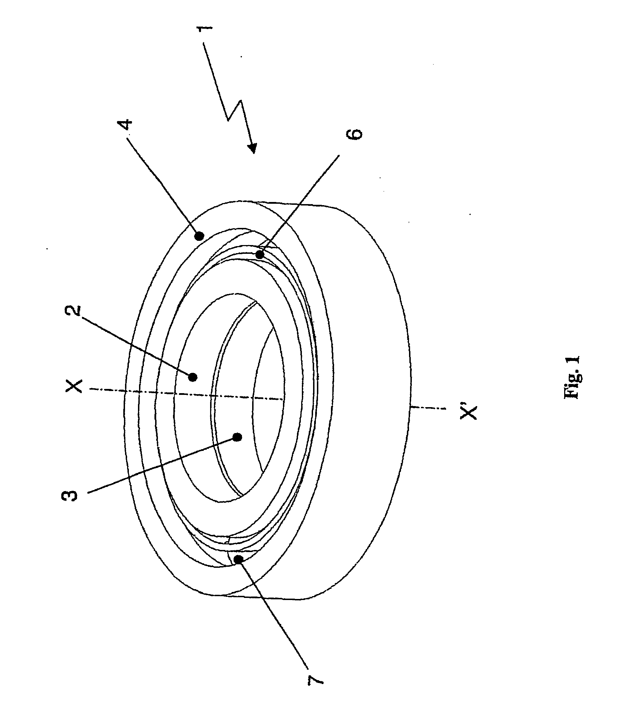

Comme mentionné ci-dessus et représenté sur la figure 1, le roulement 1, objet de l'invention, est organisé autour d'un axe XX' de rotation. Ce roulement 1 comprend une première bague 2 délimitant une première surface de roulement et une deuxième bague 4 délimitant une deuxième surface de roulement, coaxiales audit axe XX' de rotation. Ces bagues sont animées d'un mouvement relatif de rotation et sont donc entraînées à des vitesses de rotation différentes, cette vitesse de rotation pouvant être nulle pour l'une des bagues. Ce roulement comporte encore au moins une rangée d'organes 7 de roulement, constitués, dans les exemples représentés, par des billes. Toutefois, tout autre organe de roulement, tel qu'un rouleau ou un tonneau, peut également être envisagé. Cette rangée d'organes 7 de roulement est montée entre des surfaces de roulement respectives prévues sur lesdites bagues 2, 4.

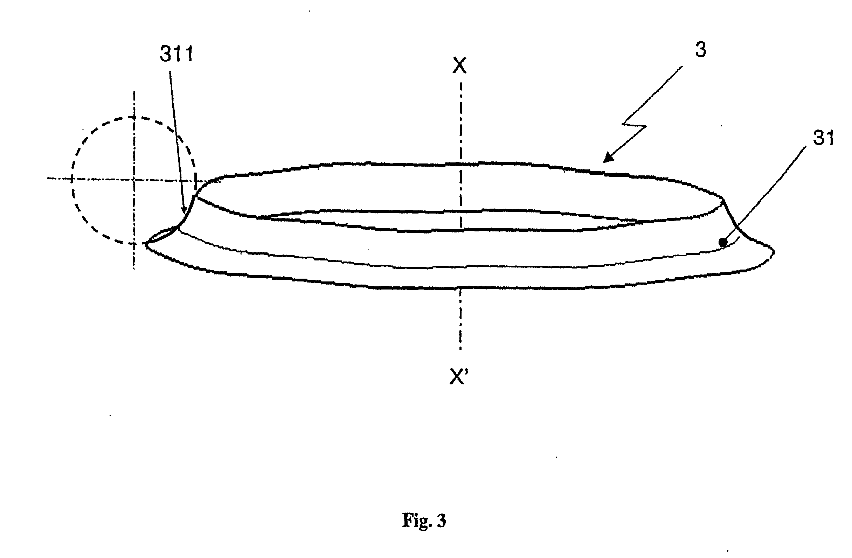

Par convention, dans ce qui suit, la référence numérique de chaque surface de roulement sera constituée de deux chiffres, le premier chiffre correspondant au numéro de la bague ménageant ladite surface de roulement, le second chiffre étant constitué par un 1 lorsque la surface de roulement est une surface constituant un chemin à profil ondulé et par un 2 lorsque la surface de roulement constitue un chemin à profil conventionnel non ondulé à la manière de roulements classiques (ligne de contact circulaire contenue dans un plan). Ainsi, dans un cas correspondant au chiffre 2, le chemin de roulement, correspondant à la ligne de contact entre la surface de la bague et les organes de roulement, est contenu dans un plan perpendiculaire à l'axe XX' de rotation du roulement alors que dans l'autre cas correspondant au chiffre 1, la ligne de contact entre la surface de la bague et les organes de roulement décrit suivant la direction axiale une sinusoïde dont le nombre de périodes sur le tour est entier. Ainsi, pour illustrer ce qui précède dans la figure 3, la surface de roulement 31 est la surface de roulement de la bague 3, cette surface étant une surface présentant un chemin à profil ondulé.

Les organes 7 de roulement, qui sont montés entre des surfaces de roulement respectives prévues sur lesdites bagues 2, 4, sont généralement insérés dans une cage 6 pour les maintenir entre eux selon un écart angulaire prédéterminé.

La première surface de roulement 21 délimitée par le premier roulement 2 constitue un chemin à profil ondulé, de préférence sinusoïdal, pour conférer, en régime (constant) de fonctionnement, un mouvement alternatif axial des première et deuxième bagues 2, 4 entre elles. Cette première surface de roulement comporte donc des ondulations périodiques sinusoïdales suivant l'axe XX'. Ces ondulations délimitent à la surface dudit chemin des creux et des bosses. La distance qui sépare le fond des creux et le sommet des bosses prise le long de l'axe XX' définit la course maximale possible d'une telle bague obtenue par contact entre billes et surface de roulement. Le contact entre les billes et les surfaces de roulement en regard est généralement oblique par rapport à l'axe XX'. Ce contact assure un roulement sensiblement sans glissement. Lorsque la forme du chemin de roulement est une forme périodique et sinusoïdale, c'est-à-dire que la composante axiale de la ligne de contact avec les organes de roulement décrit sensiblement une sinusoïde, on constate que, lorsqu'un mouvement de rotation relatif est appliqué entre les deux bagues, la hauteur des centres des organes de roulement par rapport à la bague ayant la surface de roulement ondulée est une fonction sinusoïdale dépendant de la position angulaire suivant l'axe XX' des organes par rapport à cette même bague.

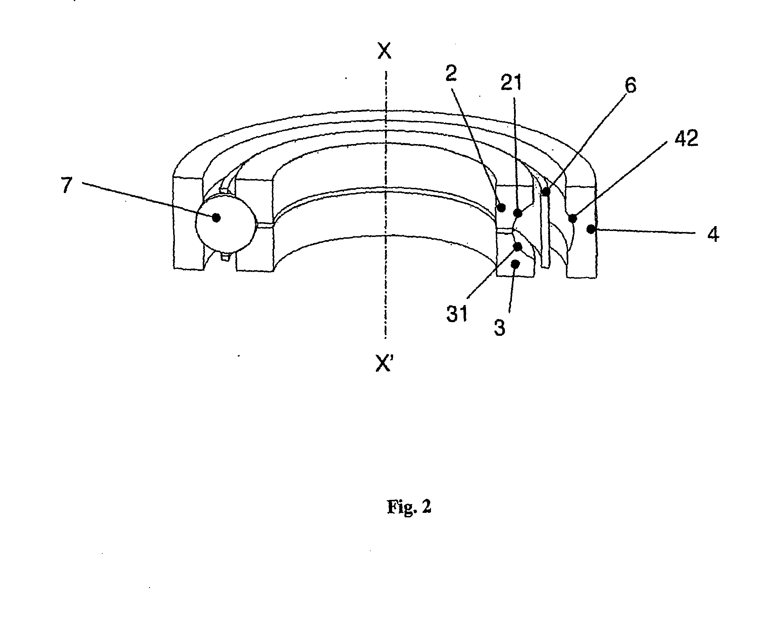

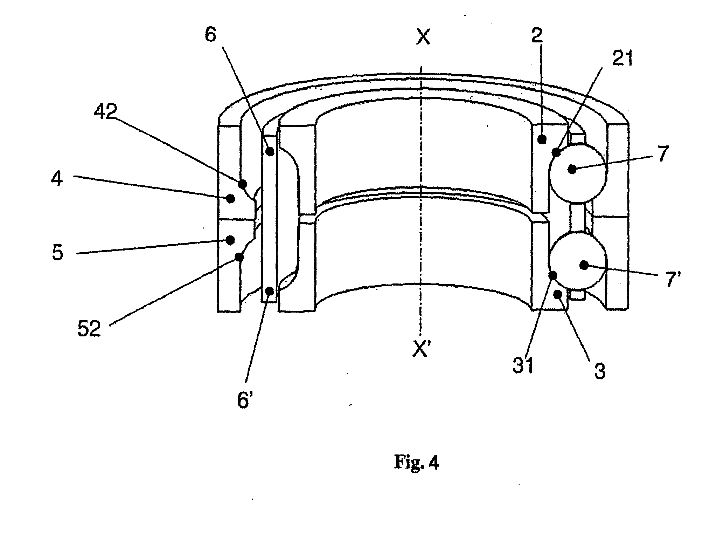

De manière caractéristique à l'invention et comme représenté aux figures 2, 4 à 6, le roulement comporte au moins une troisième surface 31 de roulement constituant un chemin à profil ondulé ménagé sur une troisième bague 3, coaxiale auxdites première et deuxième bagues 2, 4. Cette troisième surface 31 de roulement à profil ondulé coopère soit avec la rangée, dite première rangée d'organes 7 de roulement en contact avec la première surface 21 de roulement (figure 2), soit avec une seconde rangée d'organes 7' de roulement maintenus entre eux à l'aide d'une cage 6' de préférence solidaire en rotation de la cage 6 renfermant la première rangée d'organes 7 de roulement (voir figure 4), cette seconde rangée d'organes 7' de roulement étant insérée entre ladite troisième surface de roulement de 31 de la troisième bague 3 et une quatrième surface de roulement 52 d'une quatrième bague 5. La première et la troisième bague 2,3 ou la deuxième et la quatrième bague 4,5, sont alors montées mobiles axialement l'une par rapport à l'autre pour pouvoir être animées d'un mouvement relatif alternatif axial. La position relative des bagues équipées des surfaces de roulement à profil ondulé détermine, en coopération avec les organes de roulement, l'amplitude des mouvements axiaux des bagues solidaires en rotation et animées entre elles d'un mouvement alternatif axial.

Par rapport à ce qui précède, plusieurs modes de réalisation de l'invention peuvent ainsi être envisagés et sont détaillés ci-dessous.

Dans un premier mode de réalisation de l'invention conforme à celui représenté à la figure 2, le roulement comporte une troisième surface 31 de roulement constituant un chemin à profil ondulé ménagée sur une troisième bague 3, coaxiale auxdites première et deuxième bagues 2, 4, et solidaire en rotation de la première bague 2 en régime constant de fonctionnement. Cette troisième surface 31 de roulement coopère avec la rangée, dite première rangée d'organes 7 de roulement en contact avec la première surface 21 de roulement, la position relative des bagues 2, 3 équipées des surfaces 21, 31 de roulement à profil ondulé déterminant l'amplitude des mouvements axiaux transmis par ledit roulement. Ainsi, dans l'exemple représenté à la figure 2, les bagues 2 et 3 formant les bagues intérieures du roulement 1 sont munies chacune sur leur face périphérique externe d'une surface de roulement constituant un chemin à profil ondulé, de préférence sinusoïdal illustré en 21 et 31 aux figures. La bague 4 externe est quant à elle une bague munie sur sa face périphérique interne d'une surface de roulement conventionnelle non ondulée 42. De préférence, les surfaces 21, 31 de roulement ménageant un chemin de roulement à profil ondulé en forme générale de sinusoïde périodique sont de période et d'amplitude identiques d'une bague à une autre. La surface de roulement de chaque bague affecte sensiblement la forme d'un quart de tore ou d'un demi tore pour délimiter, en disposition coaxiale des bagues, la cavité de logement des organes 7 de roulement.

Comme mentionné ci-dessus, le roulement 1 possède donc trois bagues : deux bagues intérieures 2, 3 et une bague extérieure 4. Les chemins de roulement 21 et 31 des deux bagues intérieures sont tels que le contact entre les billes et chacune des surfaces se fait avec un contact oblique. Le chemin de roulement 42 de la bague 4 externe a un unique point de contact avec chaque bille, ce point étant de plus aligné avec le centre de la bille suivant une direction radiale à l'axe de roulement.

Comme mentionné ci-dessus, les deux bagues 2 et 3 ont des chemins de roulement de forme torique déformée. Le centre de la section circulaire 311 (voir figure 3) de la surface formée décrit dans le plan perpendiculaire à l'axe du roulement un cercle et, suivant la direction axiale, une sinusoïde dont le nombre de périodes est entier. Les surfaces de ces deux bagues sont de préférence identiques.

Comme mentionné ci-dessus, au moins une des surfaces de roulement, en l'occurrence ici les deux surfaces de roulement 21 et 31, constituant un chemin à profil ondulé présentent chacun n ondulations ayant une composante axiale. Ces ondulations ont une symétrie angulaire d'angle 2 π/n autour dudit axe de rotation du roulement. Les organes 7 de roulement sont en nombre égal au nombre n d'ondulations ou à un sous-multiple entier de ce nombre. Ces organes 7 de roulement sont répartis de façon équi-angulaire autour de l'axe XX' de rotation dudit roulement 1. Ils sont maintenus à écartement angulaire constant par l'intermédiaire d'une cage représentée en 6 aux figures.

Dans l'exemple représenté à la figure 2, les billes sont donc en nombre égal au nombre n d'ondulations et leur écartement angulaire maintenu par la cage 6 est constant. En fonctionnement normal, comme ce roulement comporte au moins trois bagues 2, 3, 4 coaxiales à l'axe XX' de rotation du roulement, deux des bagues, en l'occurrence les bagues 2, 3 à surfaces 21, 31 de roulement à profil ondulé sont, en régime constant de fonctionnement, à l'état entraîné en rotation de l'une quelconque des bagues, solidaires en rotation et animées d'un mouvement relatif de rotation par rapport à l'autre bague 4, dite bague lisse à surface de roulement exempte de profil ondulé. En d'autres termes, en fonctionnement normal, les bagues 2, 3 sont solidaires en rotation. La mise en rotation de ces bagues par rapport à la bague externe 4, par exemple fixe en rotation, provoque un roulement des billes le long des surfaces 21, 31, 42 de roulement. Au cours du mouvement, les billes parcourent les ondulations des chemins 21, 31 provoquant un déplacement axial de chacune des deux bagues internes 2, 3 par rapport à la bague externe 4. Lorsque les billes sont dans un creux d'une des bagues, cette bague est proche de la bague externe puis elle s'en écarte lorsque le mouvement de rotation se poursuit et que les billes montent sur les crêtes des ondulations. Les deux mouvements sinusoïdaux, appelés par la suite mouvement élémentaire des bagues 2, 3 ont la même amplitude égale à la différence de hauteur entre les creux et les crêtes des ondulations d'une surface de roulement et ont une fréquence égale au nombre d'ondulations multiplié par la vitesse relative de rotations des billes autour desdites bagues.

Le mouvement axial entre les deux bagues internes est la somme des deux mouvements élémentaires. Ce mouvement a une fréquence identique aux mouvements élémentaires mais l'amplitude est fonction de leur déphasage. Un déphasage nul conduit à une amplitude double de l'amplitude élémentaire de chaque bague tandis que si le déphasage croît, l'amplitude va décroître jusqu'à être nulle lorsque le déphasage atteint 180°. Bien évidemment, il doit être compris qu'une solution équivalente aurait été obtenue en disposant d'un roulement avec deux bagues externes à surface de roulement à chemin de profil ondulé et une bague interne à surface de roulement à chemin de profil lisse. De la même manière, diverses combinaisons peuvent être envisagées en terme de déplacement, le résultat final étant toujours constitué dans ce mode de réalisation à trois bagues par un déplacement relatif axial entre les bagues 2, 3 à surface ondulée. Ainsi, il peut être imaginé un roulement avec les bagues 2 et 3 solidaires en rotation, en régime constant de fonctionnement, qui tournent et la bague 4 fixe en rotation et libre en translation ou bien un roulement avec des bagues 2, 3 à profil ondulé fixes en rotation et animées d'un déplacement relatif axial, la bague 4 étant entraînée en rotation et montée libre en translation.

Un autre mode de réalisation de l'invention est encore représenté à la figure 4. Dans ce cas, le roulement 1 comporte au moins une troisième surface de roulement constituant un chemin à profil ondulé ménagé sur une troisième bague, coaxiale auxdites première et deuxième bagues 2, 4, cette troisième surface de roulement coopérant avec une seconde rangée d'organes 7' de roulement maintenus entre eux à l'aide d'une cage 6' solidaire en rotation de la cage 6 renfermant la première rangée d'organes 6 de roulement. A nouveau, la position relative des bagues équipées des surfaces de roulement à profil ondulé détermine l'amplitude des mouvements axiaux transmis. Dans l'exemple représenté là la figure 4, le roulement comporte donc deux bagues internes, représentées en 2 et 3 aux figures, et deux bagues externes, représentées en 4 et 5 aux figures. Les bagues 2 et 4 sont deux bagues coaxiales à l'axe de rotation du roulement et animées d'un mouvement relatif de rotation. Elles comportent au moins une rangée d'organes 7 de roulement, montés entre les surfaces 21 et 42 de roulement respectives prévues sur lesdites bagues 2, 4. La surface de roulement 21 de la bague 2 est une surface de roulement constituant un chemin à profil ondulé tandis que la surface de roulement 42 de la bague 4 est une surface de roulement dite lisse ne générant aucun déplacement axial de ladite bague lors de sa mise en contact avec les organes 7 de roulement. Les organes 7 de roulement sont maintenus entre ces dites bagues, à écartement constant, par l'intermédiaire d'une cage 6. Ce roulement 1 comporte encore deux autres bagues représentées en 3 et 5 aux figures. La bague interne 3 comporte à nouveau une surface 31 de roulement constituant un chemin à profil ondulé tandis que la bague. 5 externe comporte une surface 52 de roulement constituant un chemin à profil lisse exempt d'ondulations. Une rangée d'organes 7' de roulement est montée entre lesdites surfaces 31, 52 de roulement respectives prévues sur les bagues 3 et 5 et une cage 6' est prévue pour maintenir les organes 7' de roulement entre eux selon un écart angulaire prédéterminé. Les cages 6 et 6' sont solidaires en rotation. Elles peuvent être formées d'une même pièce ou de deux pièces différenciées couplées entre elles pour être rendues solidaires en rotation. De la même manière, les bagues externes 4 et 5 sont ici solidaires en rotation, en régime constant de fonctionnement. Il en est de même des bagues internes 2 et 3. Par contre, les bagues internes 2 et 3 sont animées d'un mouvement relatif de rotation par rapport aux bagues 4 et 5.

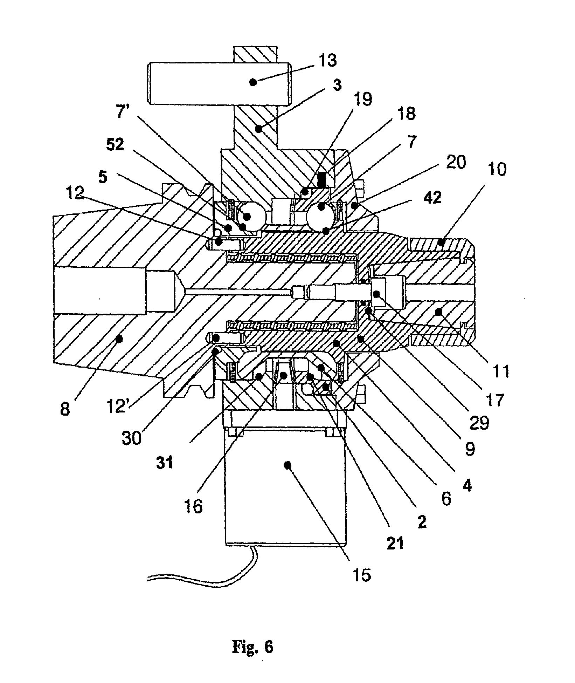

Le fonctionnement d'un tel organe de roulement est analogue à celui décrit ci-dessus. A nouveau, c'est le déphasage angulaire entre les surfaces 21, 31 de roulement à profil ondulé des bagues 2 et 3 qui détermine l'amplitude des mouvements axiaux transmis. Bien évidemment, une solution équivalente aurait pu consister à ménager les surfaces de roulement à profil ondulé sur les bagues externes 4 et 5 et à ménager des surfaces de roulement à profil lisse sur les bagues 2 et 3. En effet, les bagues solidaires en rotation, dont les surfaces de roulement à chemin à profil ondulé sont tournées vers la surface de roulement de la ou des bagues lisses, sont soit entourées par la ou les bagues lisses, comme l'illustre la figure 4 et constituent les bagues intérieures du roulement, soit entourent la ou les bagues lisses comme illustré dans le roulement représenté à la figure 6 et constituent les bagues extérieures du roulement.

Comme mentionné dans le cas précédent, diverses combinaisons sont possibles en vue de l'obtention d'un déplacement relatif axial entre les bagues 2, 3 à profilé ondulé. Ainsi, les bagues 2, 3 peuvent être fixes en rotation et libres en translation, les bagues 4, 5 étant entraînées en rotation et libres en translation. Les bagues 2, 3 peuvent également être des bagues rotatives.

Bien entendu et comme décrit ci-après dans le mode de réalisation de l'outillage représenté à la figure 6, on peut également prévoir que le déplacement relatif alternatif axial soit réalisé entre les bagues qui portent les surfaces de roulement lisses. Dans ce cas, ces bagues à surfaces de roulement lisses sont montées mobiles axialement l'une par rapport à l'autre pour pouvoir être animées d'un mouvement relatif alternatif axial. Les deux autres bagues solidaires en rotation qui portent les surfaces de roulement ondulées sont montées solidaires en translation.

Dans tout ce qui précède, les surfaces de roulement des bagues sont considérées en contact d'appui roulant avec les organes de roulement. En conséquence, à chaque fois, ces bagues ou le roulement comportent des moyens généralement élastiques de rappel ou de maintien des surfaces de roulement des bagues en contact avec lesdits organes de roulement.

De même, l'amplitude de la course est réglée entre une valeur minimale ou nulle lorsque les points de contact entre les organes de roulement et une surface de roulement ondulée sont dans les creux tandis qu'ils sont dans les bosses sur l'autre surface de roulement ondulée et une valeur maximale lorsque les points de contacts des organes de roulement avec les deux surfaces passent simultanément sur les creux ou sur les bosses. A l'intérieur de ces deux valeurs extrêmes, l'amplitude de la course peut être réglée à une valeur quelconque par décalage angulaire des bagues à surface ondulée suivant la position angulaire initiale des organes de roulement par rapport aux ondulations des deux bagues. En effet, la position relative des points de contact des organes de roulement avec les surfaces ondulées respectives des bagues détermine l'amplitude du mouvement axial entre les deux bagues et par suite des mouvements axiaux transmis.

Deux exemples d'application de l'utilisation d'un tel organe de roulement à un outillage vont à présent être décrits.

Dans ces deux exemples, l'outillage de façonnage comprend un porte-outil 9 entraîné en action par un bloc moteur 8 encore appelé arbre moteur 8. Le porte-outil peut être raccordé soit directement au bloc moteur, soit à l'aide d'au moins une pièce interface. Le porte-outil 9 est animé d'un mouvement alternatif axial dont l'amplitude est réglable sans conséquence sur la fréquence dudit mouvement par l'intermédiaire d'un roulement 1 du type précité, interposé entre bloc moteur 8 et porte-outil 9. Le réglage de l'amplitude du mouvement alternatif axial peut s'opérer soit de manière manuelle, soit de manière automatique. Dans le cas d'un mode de réglage manuel, l'une des bagues équipée d'une surface de roulement à profil ondulé comporte des repères visuels de sa position angulaire soit par rapport à l'autre bague équipée d'une surface de roulement à profil ondulé, soit par rapport à une référence externe audit roulement à laquelle le roulement est couplé, cette référence externe étant généralement prise sur l'outillage. Ainsi, généralement, l'outil comporte des moyens d'indexage d'une bague à surface de roulement à profil ondulé par rapport à une autre bague à surface de roulement à profil ondulé ou par rapport au bloc moteur 8.

Dans un autre mode de réalisation où le réglage de l'amplitude du mouvement axial transmis par le roulement au porte-outil 9 s'effectue de manière automatique, les bagues, équipées de surface de roulement à profil ondulé, sont reliées par l'intermédiaire d'un mécanisme motorisé d'entraînement en rotation de l'une des bagues par rapport à l'autre en vue de permettre le réglage de l'amplitude des mouvements axiaux transmis. Dans ce cas, l'outillage peut comporter au moins un moyen 18 de mesure de l'amplitude du mouvement alternatif de translation du porte-outil 9 et des moyens 15, 16 de commande de la position angulaire relative des bagues à surface de roulement à profil ondulé en fonction de l'amplitude déterminée par le ou les moyen(s) 18 de mesure.

Ces modes de réalisation vont à présent être décrits plus en détail.

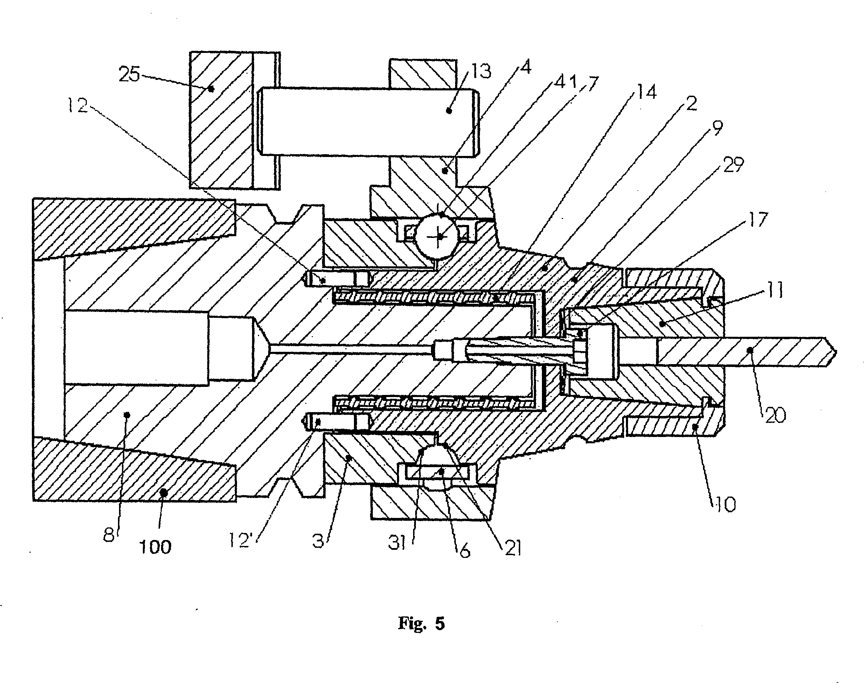

Dans l'exemple représenté à la figure 5, l'outillage de façonnage est plus particulièrement destiné à la réalisation d'opérations de perçage à l'aide d'un foret 20. Ce foret est monté à l'intérieur d'un porte-outil représenté en 9 aux figures. Ce porte-outil 9, encore appelé dans ce cas particulier porte-foret, est couplable en rotation à l'arbre moteur 8 de l'outillage par l'intermédiaire de goupilles représentées en 12, 12' aux figures. L'arbre moteur 8 est donc lié au rotor de broche (non représenté, si, n°100) de la machine outil par des moyens conventionnels de bridage qui équipent les broches. Lors de son entraînement en rotation, cet arbre moteur 8 entraîne en rotation, par l'intermédiaire des goupilles 12, 12', le porte foret 9 apte à être animé d'un mouvement relatif axial par rapport à l'arbre 8 grâce à la présence d'une cage à billes 14 qui s'étend sur le pourtour de l'arbre 8, dans la zone de liaison arbre 8/porte foret 9. Le foret 20 est quant à lui fixé au porte foret 9 de façon classique par un système pince et écrou de serrage représenté en 10, 11 aux figures.

Pour permettre un déplacement alternatif axial du porte foret 9 par rapport à l'arbre moteur 8, un roulement 1 conforme à l'invention est interposé entre arbre 8 moteur et porte-outil 9. Dans l'exemple représenté, ce roulement est un roulement à trois bagues. Une première bague 2, dite interne, est constituée par le porte-foret 9 et présente une surface de roulement 21 à profil ondulé. Une autre bague, représentée en 3, constitue une seconde bague interne, la surface de roulement 31 à chemin de profil ondulé tandis que la bague externe, représentée en 4 aux figures, présente une surface de roulement 42 à profil lisse. Cette bague externe 4 est une bague libre en translation suivant une direction parallèle à l'axe XX' du roulement mais maintenue immobilisée en rotation par l'intermédiaire d'un index d'arrêt représenté en 13 aux figures, serti sur 4 et pouvant coulisser dans le guidé 25 solidaire du carter du stator de broche (non représenté). Des moyens maintiennent en pression permanente les bagues 2, 3, 4 et en particulier les surfaces de roulement des bagues 2, 3, 4 en appui contre les organes de roulement représentés ici en 7. Ces organes de roulement 7 sont maintenus à écartement prédéterminé par l'intermédiaire d'une cage 6. Les moyens de pression sont ici constitués par une vis de serrage 17 et des rondelles ressort 29 qui maintiennent une pression minimum sur le roulement garantissant d'une part le contact entre les billes et les bagues, mais également une adhérence suffisante pour immobiliser en rotation la bague de réglage 3 par rapport au porte foret 9. Lors des opérations de perçage, les bagues internes 2 et 3 solidaires en rotation, en régime constant de fonctionnement, sont entraînées en rotation par l'arbre moteur 8 dont le mouvement de rotation est transmis à la bague 2 ou porte foret 9 par les goupilles 12, 12' et à la bague 3 par contact d'appui tandis que la bague externe 4 est maintenue fixe en rotation. Le déplacement des organes 7 de roulement le long des surfaces de roulement ondulées génère alors un mouvement axial alternatif entre les bagues 2 et 3 qui supportent les surfaces ondulées. Le porte foret 9 se trouve ainsi animé d'un mouvement alternatif axial. L'amplitude des oscillations du porte foret 9 est déterminée par le déphasage des ondulations entre les deux surfaces de roulement 21, 31 à profil ondulé des bagues 2 et 3. Ce déphasage est repéré par des graduations portées par la bague 3 et par un repère porté sur la bague 2. Le réglage de l'amplitude du mouvement axial est modifié en changeant la position angulaire de la bague 3 de réglage par rapport au porte foret 9 correspondant à la bague 2. Pour cela, il est nécessaire de vaincre l'adhérence entre bague 3 et arbre 8 en forçant la rotation de la bague 3 par l'application d'un effort à l'aide d'un outil faisant bras de levier. A cet effet, la bague de réglage 3 est munie de deux méplats permettant sa prise par un outil de réglage. L'amplitude souhaitée est obtenue en déplaçant angulairement la bague 3 afin d'amener la graduation correspondante au droit du repère choisi porté par le porte foret 9. Ce réglage s'opère manuellement. Il aurait également pu être envisagé de prendre, par rapport aux graduations portées par la bague 3, une référence sur l'arbre 8 moteur ou la bague externe 4. La fréquence des oscillations axiales du foret est sensiblement égale à la moitié du produit de la vitesse de rotation du foret par le nombre de périodes des ondulations des surfaces ondulées.

Dans l'exemple représenté à la figure 6, l'outillage diffère de celui représenté à la figure 5 d'une part par la nature du roulement, d'autre part par le mode de réglage de l'amplitude qui est ici un mode de réglage automatisé. Le roulement 1 est ici constitué de quatre bagues, à savoir deux bagues externes représentées en 2 et 3 aux figures, ces bagues externes comportant à chaque fois une surface de roulement ondulée représentée en 21 et 31 aux figures et deux bagues internes représentées en 4 et 5 aux figures, l'une des bagues internes constituant le porte foret 9, ces bagues étant munies de surfaces de roulement 42, 52 non ondulées.

Le principe d'entraînement du porte-foret 9 par l'arbre 8 moteur à l'aide de goupilles 12, 12' est analogue à celui décrit précédemment.

Les bagues 3, 5 et 2, 4 coopèrent entre elles pour loger à chaque fois, entre leurs surfaces de roulement respectives 31, 52, 21, 42, des organes de roulement représentés en 7, 7' aux figures. Ces derniers sont maintenus selon un écart angulaire prédéterminé par l'intermédiaire d'une cage 6 unique, cette cage étant soit flexible axialement entre les deux rangées d'organe de roulement soit avec des ouvertures pour les billes qui leur permettent un mouvement axial suffisant afin de permettre à ces dernières de suivre les ondulations des surfaces ondulées.

Le roulement 1 est donc constitué d'un premier ensemble formé de la bague intérieure 5, de la bague extérieure 3, des organes 7' de roulement de la cage 6 et d'un second ensemble dit aval composé du porte foret 9 ou bague 4 interne, de la bague extérieure 2 et d'organes 7 de roulement maintenus par la même cage 6. Les bagues 2, 3 sont solidaires en rotation, en régime constant de fonctionnement. La bague externe 3 du roulement amont supporte un moteur 15 de réglage de l'amplitude du mouvement alternatif en va-et-vient et reçoit une butée à billes 19 qui sert d'appui à la bague externe 2 de l'ensemble aval. A l'identique du réglage manuel décrit ci-dessus, la bague externe 3 est immobilisée en rotation et montée libre axialement par l'intermédiaire d'une pièce 13 sertie sur la bague 3 et coulissant dans une rainure 25 d'une pièce stationnaire fixée sur le carter du bloc moteur. L'arbre moteur 8 transmet par l'intermédiaire des goupilles 12, 12' son mouvement de rotation à la bague 4 tandis que la bague 5 est montée libre en rotation par rapport à l'arbre moteur 8 auquel elle est liée par une butée à bille 30. Lors du perçage, la bague 4 est entraînée en rotation tandis que les bagues externes 2 et 3 sont immobiles en rotation. Idéalement, si les deux étages du roulement sont identiques, la bague 5 est contrainte à tourner à la même vitesse que la bague 4 puisque les deux rangées d'organes de roulement 7 et 7' sont liées en rotation. Autrement dit les deux bagues 4 et 5 sont solidaires en rotation, en régime constant de fonctionnement. Cependant, cette relation n'est plus vérifiée si les différentes paires de surfaces 21, 31 et 42, 52 ou organes de roulement 7, 7' présentent des différences, comme celles provoquées par des défauts de fabrication. Dans ce cas, la butée à bille 30 permet à la bague 5 de tourner (lentement) autour de son axe afin de compenser les écarts de vitesse de rotation induits par les différences géométriques des différents éléments de roulement. La différence de vitesse de rotation entre, d'une part, les bagues 4, 5 à profil non ondulé et, d'autre part, les bagues 2, 3 à profil ondulé provoque le déplacement des organes 7, 7' de roulement le long des surfaces de roulement 21, 31 à profil ondulé, ce qui génère le mouvement axial alternatif entre les bagues 4 et 5 et anime ainsi le porte foret 9 et le foret 20 associé d'un mouvement alternatif de va-et-vient. L'amplitude des oscillations est déterminée par le déphasage des bagues externes 2 et 3. Ce réglage de l'amplitude des vibrations s'opère par l'intermédiaire du moteur électrique 15 apte à modifier la position angulaire desdites bagues. A cet effet, la bague 2 porte une couronne dentée entraînée par le pignon 16 du moteur 15. Pour assurer un réglage précis, la position angulaire de la bague 2 par rapport à la bague 3 est mesurée par un capteur 18. Les signaux de commande du moteur peuvent être acheminés de la machine au porte-outil via une connexion au niveau du contact entre l'index 13 et une pièce de réception de l'index 13.

Il est également possible de scinder l'unique cage 6 en deux cages distinctes, chacune portant une rangée d'organes de roulement. Dans ce cas, la butée à bille 30 est supprimée et la bague 5 est avantageusement rendue solidaire en rotation du bloc moteur 8 puisque les écarts de vitesse provoqués par les différences géométriques des différents éléments du roulement sont absorbés par une différence de vitesse de rotation entre les deux cages. Dans une telle configuration, l'amplitude du mouvement oscillant ne dépend plus uniquement de la position angulaire relative entre les ondulations des surfaces ondulées des bagues puisque le déphasage entre les mouvements axiaux des deux ensembles dépend également de la position angulaire relative entre les deux cages 6 et 6'. Pour assurer un réglage précis, la position angulaire de la bague 2 par rapport à la bague 3est pilotée par la mesure du déphasage entre les mouvements générés par les deux ensembles, cette mesure étant réalisée par deux capteurs, chaque capteur mesurant la phase d'un mouvement.

Bien entendu, les surfaces ondulées peuvent indifféremment être portées par les bagues externes comme représenté à la figure 6 ou bien portées par les bagues internes.

On peut également prévoir de réaliser l'outillage avec un roulement selon le mode de réalisation représenté à la figure 4, pour lequel le déplacement relatif alternatif axial est réalisé entre les bagues qui portent les surfaces de roulement ondulées. Dans ce cas, ces bagues à surfaces de roulement ondulées sont montées mobiles axialement l'une par rapport à l'autre pour pouvoir être animées d'un mouvement relatif alternatif axial.

Dans tout ce qui précède, on peut prévoir que les bagues solidaires en rotation, dont les surfaces de roulement à chemin à profil ondulé sont tournées vers la surface de roulement de la ou des bagues lisses, sont soit entourées par la ou les bagues lisses et constituent les bagues intérieures du roulement, soit entourent la ou les bagues lisses et constituent les bagues extérieures du roulement. Lorsque ce sont les bagues extérieures du roulement qui sont munies de surfaces de roulement à profil ondulé, ces surfaces de roulement à profil ondulé sont ménagées sur la face périphérique interne du roulement, tandis que lorsque ce sont les bagues intérieures du roulement qui sont munies de surfaces de roulement à profil ondulé, ces surfaces de roulement à profil ondulé sont ménagées sur la face périphérique externe du roulement.

## Revendications

1. Roulement (1), de préférence à billes, organisé autour d'un axe (XX') de rotation, ledit roulement (1) comprenant au moins une première bague (2) délimitant une première surface de roulement (21) et une deuxième bague (4) délimitant une deuxième surface de roulement (42), lesdites bagues (2, 4) étant coaxiales audit axe de rotation et animées d'un mouvement relatif de rotation, au moins une rangée d'organes (7) de roulement, tels que des billes, montés à contact roulant entre les surfaces (21, 42) de roulement respectives prévues sur lesdites bagues (2, 4), lesdits organes (7) de roulement étant généralement insérés dans une cage (6) pour les maintenir entre eux selon un écart angulaire prédéterminé, la première surface (21) de roulement constituant un chemin à profil ondulé, de préférence sinusoïdal, pour conférer, en régime constant de fonctionnement, un mouvement alternatif axial desdites première et deuxième bagues entre elles,
**caractérisé en ce qu'**il comporte au moins une troisième surface (31) de roulement constituant un chemin à profil ondulé ménagée sur une troisième bague (3), coaxiale auxdites première et deuxième bagues (2, 4), cette troisième surface (31) de roulement à profil ondulé, ménagée sur la troisième bague (3), coopérant soit avec la rangée, dite première rangée d'organes (7) de roulement en contact avec la première surface (21) de roulement, soit avec une seconde rangée d'organes (7') de roulement maintenus entre eux à l'aide d'une cage (6') de préférence solidaire en rotation de la cage (6) renfermant la première rangée d'organes (7) de roulement, cette seconde rangée d'organes (7') de roulement étant insérée entre ladite troisième surface de roulement (31) de la troisième bague (3) et une quatrième surface de roulement (52) d'une quatrième bague (5), au moins l'une des troisième ou quatrième bagues (3, 5) étant montée solidaire en rotation, en régime constant de fonctionnement, respectivement de la première ou de la deuxième bague (2,4) et les ou deux des bagues solidaires en rotation, à savoir la première et la troisième bague (2,3) ou la deuxième et la quatrième bague (4,5), étant montées mobiles axialement l'une par rapport à l'autre pour pouvoir être animées d'un mouvement relatif alternatif axial, la position angulaire relative des première et troisième bagues (2, 3) équipées des surfaces de roulement (21, 31) à profil ondulé déterminant, en coopération avec les organes de roulement, l'amplitude des mouvements axiaux des bagues solidaires en rotation et animées entre elles d'un mouvement alternatif axial.

2. Roulement (1) selon la revendication 1, du type comportant une seconde rangée d'organes (7') de roulement,
**caractérisé en ce que** deux (4,5) des bagues (2,3 ou 4,5) solidaires en rotation sont réalisées d'une seule pièce.

3. Roulement selon la revendication 1,
**caractérisé en ce que** les surfaces (21, 31) de roulement à profil ondulé des première et troisième bagues (2, 3), dites bagues à profil ondulé, sont tournées vers la surface de roulement (42, 52) exempte de profil ondulé de la deuxième (4) ou des deuxième et quatrième bagues (4, 5), dite(s) bague(s) lisse(s), ces première et troisième bagues (2, 3) à surface de roulement à profil ondulé formant soit les bagues intérieures (2, 3) dudit roulement, soit les bagues extérieures (2, 3) dudit roulement.

4. Roulement selon l'une des revendications 1 à 3,
**caractérisé en ce que** les organes de roulement sont des billes et **en ce que** la surface de roulement (21, 31, 42, 52) de chaque bague (2, 3, 4, 5) affecte sensiblement la forme d'un quart de tore ou d'un demi tore pour délimiter, en disposition coaxiale des bagues, au moins une cavité de logement des organes (7, 7') de roulement.

5. Roulement selon l'une des revendications 1 à 4,
**caractérisé en ce que** les surfaces (21, 31) de roulement ménageant un chemin de roulement à profil ondulé en forme générale de sinusoïde sont identiques d'une bague à une autre.

6. Roulement selon l'une des revendications 1 à 5,
**caractérisé en ce qu'**au moins une des surfaces de roulement (21, 31) constituant un chemin à profil ondulé présente n ondulations ayant une composante axiale, ces ondulations ayant une symétrie angulaire d'angle 2 π/n autour dudit axe de rotation du roulement, les organes (7, 7') de roulement étant en nombre égal au nombre n d'ondulations ou à un sous-multiple entier de ce nombre, ces organes (7, 7') de roulement étant répartis de façon équi-angulaire autour de l'axe (XX') de rotation dudit roulement (1).

7. Roulement (1) selon l'une des revendications 1 à 6,
**caractérisé en ce que** la position angulaire relative des première et troisième bagues (2, 3), équipées de surface (21, 31) de roulement à profil ondulé, est réglable par déplacement angulaire desdites bagues l'une par rapport à l'autre, soit manuellement, soit par l'intermédiaire d'un mécanisme (15, 16) motorisé d'entraînement en rotation de l'une des bagues par rapport à l'autre en vue de permettre le réglage de l'amplitude des mouvements axiaux transmis.

8. Roulement selon l'une des revendications 1 à 6,
**caractérisé en ce que** les première et troisième bagues, équipées de surface de roulement à profil ondulé, sont déplaçables angulairement l'une par rapport à l'autre et **en ce que** l'une (3) des bagues (2, 3), équipée d'une surface (31) de roulement à profil ondulé, comporte des repères visuels de sa position angulaire, soit par rapport à l'autre bague (2) équipée d'une surface (21) de roulement à profil ondulé, soit par rapport à une référence externe audit roulement à laquelle le roulement est couplé.

9. Roulement selon l'une des revendication 1 à 8,
**caractérisé en ce qu'**il comporte au moins quatre bagues (2, 3, 4, 5) et deux cages d'organes de roulement déplaçables angulairement l'une par rapport à l'autre en vue de permettre le réglage de l'amplitude des mouvements axiaux transmis.

10. Outillage de façonnage, tel que perçage, fraisage, usinage, du type comprenant un porte-outil (9) entraîné en rotation par un bloc moteur (8) dont il est solidaire en rotation,
**caractérisé en ce que** le porte-outil (9) est animé par rapport au bloc moteur (8) d'un mouvement alternatif axial à amplitude réglable indépendamment de la fréquence par l'intermédiaire d'un roulement (1), conforme à l'une des revendications 1 à 9, interposé entre bloc moteur (8) et porte-outil (9).

11. Outillage de façonnage selon la revendication 10,
**caractérisé en ce qu'**il comporte des moyens d'indexage d'une bague à surface de roulement à profil ondulé par rapport à une autre bague à surface de roulement à profil ondulé ou par rapport au bloc moteur (8).

12. Outillage de façonnage selon l'une des revendications 10 et 11, **caractérisé en ce qu'**il comporte au moins un moyen (18) de mesure de l'amplitude du mouvement alternatif de translation du porte-outil (9) et des moyens (15, 16) de commande de la position angulaire relative des bagues à surface de roulement à profil ondulé en fonction de l'amplitude déterminée par le ou les moyen(s) (18) de mesure.

13. Outillage selon l'une des revendications 10 à 12, ledit roulement (1) étant du type comprenant quatre bagues (2, 3, 4, 5), deux bagues intérieures (4, 5) et deux bagues extérieures (2, 3), et deux rangées d'organes de roulement (7, 7') liées en rotation, ledit bloc-moteur (8) entraînant en rotation l'une des bagues intérieures (4), **caractérisé en ce qu'**il est prévu une butée à billes (30) entre l'autre bague intérieure (5) du roulement (1) et ledit bloc-moteur (8).

## Claims

1. A rolling bearing (1), preferably a ball rolling bearing, organized about a rotation axis (XX'), said rolling bearing (1) comprising at least one first ring (2) delimiting a first rolling surface (21) and a second ring (4) delimiting a second rolling surface (42), said rings (2, 4) being coaxial to said rotation axis and given a relative rotation movement, at least one row of rolling bodies (7), such as balls, mounted in rolling contact between the respective rolling surfaces (21, 42) provided on said rings (2, 4), said rolling bodies (7) generally being inserted in a cage (6) to hold them together with a predetermined angular difference, the first rolling surface (21) constituting a raceway with undulating profile, preferably sinusoidal, to impart, in steady-state operating mode, a reciprocating axial movement of said first and second rings relative to each other,
**characterized in that** it comprises at least one third rolling surface (31) constituting a raceway with undulating profile provided on a third ring (3), coaxial to said first and second rings (2, 4), this third rolling surface (31) with undulating profile, provided on the third ring (3), cooperating either with the row, called first row of rolling bodies (7) in contact with the first rolling surface (21), or with a second row of rolling bodies (7') held together by means of a cage (6') preferably mounted to rotate as one with the cage (6) enclosing the first row of rolling bodies (7), this second row of rolling bodies (7') being inserted between said third rolling surface (31) of the third ring (3) and a fourth rolling surface (52) of a fourth ring (5), at least one of the third or fourth rings (3, 5) being mounted to rotate as one, in steady-state operating mode, respectively with the first or the second ring (2, 4) and the or both rings which rotate as one, namely the first and the third ring (2, 3) or the second and the fourth ring (4, 5), being mounted to move axially one relative to the other so that they can be driven by a relative reciprocating axial movement, the relative angular position of the first and third rings (2, 3) equipped with the rolling surfaces (21, 31) with undulating profile determining, in collaboration with the rolling bodies, the amplitude of the axial movements of the rings which rotate as one and are driven relative to each other by a reciprocating axial movement.

2. The rolling bearing (1) as claimed in claim 1, of the type comprising a second row of rolling bodies (7'),
**characterized in that** two (4, 5) of the rings (2,3 or 4,5) which rotate as one are produced as a single piece.

3. The rolling bearing as claimed in claim 1,
**characterized in that** the rolling surfaces (21, 31) with undulating profile of the first and third rings (2, 3), called rings with undulating profile, face towards the rolling surface (42, 52) without undulating profile of the second (4) or of the second and fourth rings (4, 5), called smooth ring(s), these first and third rings (2, 3) with rolling surface with undulating profile forming either the internal rings (2, 3) of said rolling bearing, or the external rings (2, 3) of said rolling bearing.

4. The rolling bearing as claimed in one of claims 1 to 3,
**characterized in that** the rolling bodies are balls and **in that** the rolling surface (21, 31, 42, 52) of each ring (2, 3, 4, 5) assumes substantially the form of a quarter torus or of a half torus to delimit, when the rings are arranged coaxially, at least one cavity to house the rolling bodies (7, 7').

5. The rolling bearing as claimed in one of claims 1 to 4,
**characterized in that** the rolling surfaces (21, 31) that provide a rolling raceway with undulating profile in generally sinusoidal form are identical from one ring to another.

6. The rolling bearing as claimed in one of claims 1 to 5,
**characterized in that** at least one of the rolling surfaces (21, 31) constituting a raceway with undulating profile has n undulations having an axial component, these undulations having an angular symmetry of angle 2 n/n about said rotation axis of the rolling bearing, the number of the rolling bodies (7, 7') being equal to the number n of undulations or to an integer sub-multiple of this number, these rolling bodies (7, 7') being distributed equi-angularly about the rotation axis (XX') of said rolling bearing (1).

7. The rolling bearing (1) as claimed in one of claims 1 to 6,
**characterized in that** the relative angular position of the first and third rings (2, 3), equipped with rolling surface (21, 31) with undulating profile, can be adjusted by angular displacement of said rings one relative to the other, either manually, or through the intermediary of a motorized mechanism (15, 16) to drive one of the rings rotation-wise relative to the other in order to enable the amplitude of the transmitted axial movements to be adjusted.

8. The rolling bearing as claimed in one of claims 1 to 6,
**characterized in that** the first and third rings, equipped with rolling surface with undulating profile, can be displaced annularly one relative to the other and **in that** one (3) of the rings (2, 3), equipped with a rolling surface (31) with undulating profile, comprises visual markers of its angular position, either relative to the other ring (2) equipped with a rolling surface (21) with undulating profile, or relative to a reference external to said rolling bearing to which the rolling bearing is coupled.

9. The rolling bearing as claimed in one of claims 1 to 8,
**characterized in that** it comprises at least four rings (2, 3, 4, 5) and two cages of rolling bodies that can be displaced angularly one relative to the other in order to enable the amplitude of the transmitted axial movements to be adjusted.

10. A shaping tool, such as a drilling, milling or machining tool, of the type comprising a tool-holder (9) driven rotation-wise by a motor block (8) with which it rotates as one,
**characterized in that** the tool-holder (9) is driven relative to the motor block (8) by a reciprocating axial movement with amplitude that can be adjusted independently of the frequency through the intermediary of a rolling bearing (1), conforming to one of claims 1 to 9, inserted between the motor block (8) and the tool-holder (9).

11. The shaping tool as claimed in claim 10,
**characterized in that** it comprises means of indexing a ring with rolling surface with undulating profile relative to another ring with rolling surface with undulating profile or relative to the motor block (8).

12. The shaping tool as claimed in one of claims 10 and 11,
**characterized in that** it comprises at least one means (18) of measuring the amplitude of the reciprocating translation movement of the tool-holder (9) and means (15, 16) of controlling the relative angular position of the rings with rolling surface with undulating profile according to the amplitude determined by the measurement means (18).

13. The tool as claimed in one of claims 10 to 12, said rolling bearing (1) being of the type comprising four rings (2, 3, 4, 5), two internal rings (4, 5) and two external rings (2, 3), and two rows of rolling bodies (7, 7') linked in rotation, said motor block (8) driving rotation-wise one of the internal rings (4), **characterized in that** a thrust ball bearing (30) is provided between the other internal ring (5) of the rolling bearing (1) and said motor block (8).

## Patentansprüche

1. Lager (1), vorzugsweise Kugellager, welches um eine Rotationsachse (XX') herum angeordnet ist, wobei das Lager (1) mindestens einen ersten Ring (2) aufweist, der eine erste Lagerfläche (21) begrenzt und einen zweiten Ring (4), der eine zweite Lagerfläche (42) begrenzt, wobei die Ringe (2, 4) koaxial zur besagten Rotationsachse und von einer relativen Rotationsbewegung beaufschlagt sind,
mindestens eine Reihe von Rollorganen (7) wie Kugeln, die im Rollkontakt zwischen den Lagerflächen (21, 42) respektive auf den Ringen (2, 4) montiert sind, wobei die Rollorgange (7) allgemein in einem Käfig (6) eingeschlossen sind, um sie untereinander in einem bestimmten Winkelabstand zu halten, wobei die erste Lagerfläche eine Bahn mit wellenförmigem, vorzugsweise sinusförmigem Profil bildet, um bei konstanter Drehzahl eine wechselnde axiale Bewegung des ersten und zweiten Ringes untereinander zu gewährleisten,
**dadurch gekennzeichnet,**
**dass** es mindestens eine dritte Lagerfläche (31) aufweist, die eine Bahn mit wellenförmigem Profil auf einem dritten Ring (3) bildet, der koaxial zum ersten und zweiten Ring (2, 4) angeordnet ist, wobei die dritte Lagerfläche (31) mit dem wellenförmigen Profil auf dem dritten Ring (3) entweder mit der Reihe, die besagte erste Reihe von Rollorganen (7) in Kontakt mit der ersten Lagerfläche (21) zusammen wirkt oder mit einer zweiten Reihe von Rollorganen (7'), die untereinander mit Hilfe eines Käfigs (6') gehalten sind, der vorzugsweise in einheitlicher Rotation mit dem Käfig (6) ist, der die erste Reihe von Rollorganen (7) enthält, wobei diese zweite Reihe von Rollorganen (7') zwischen der dritten Lagerfläche (31) des Ringes (3) und einer vierten Lagerfläche (52) eines vierten Ringes (5) eingeschlossen ist und mindestens eine der dritten oder vierten Ringe (3, 5) bei konstanter Drehzahl in einheitlicher Rotation jeweils mit dem ersten oder dem zweiten Ring (2, 4) sind und diese oder beide der Ringe in einheitlicher Rotation, nämlich der erste und der dritte Ring (2, 3) oder der zweite und der vierte Ring (4, 5), die gegeneinander axial beweglich montiert sind, um von einer relativen axialen Wechselbewegung beaufschlagt werden zu können, wobei die relative Winkelposition des ersten und dritten Rings (2, 3), die mit den Lagerflächen (21, 31) mit dem wellenförmigen Profil ausgestattet sind, in Zusammenarbeit mit den Rollorganen, die Amplitude der Axialbewegungen der rotationseinheitlichen Ringe begrenzt und zwischen ihnen eine wechselnde Axialbewegung bewirkt.

2. Lager (1) nach Anspruch 1 vom Typ, dass eine zweite Reihe von Rollorganen (7') beinhaltet,
**dadurch gekennzeichnet,**
**dass** zwei (4, 5) der Ringe (2, 3) oder (4, 5) mit gemeinsamer Rotation einstückig ausgebildet sind.

3. Lager nach Anspruch 1,
**dadurch gekennzeichnet,**
**dass** die Lagerflächen (21, 31) mit dem wellenförmigen Profil des ersten und zweiten Ringes (2, 3), wobei besagte Ringe ein wellenförmiges Profil aufweisen, gegen die Lagerfläche (42, 52) ohne wellenförmiges Profil des zweiten (4) oder des zweiten und vierten Ringes (4, 5) geneigt sind, wobei besagte Ringe bzw. besagter Ring glatt ausgestaltet sind, und der erste und zweite Ring (2, 3) mit einer Lagerfläche mit wellenförmigem Profil entweder die inneren Ringe (2, 3) des Lagers oder die äußeren Ringe (2, 3) des Lagers bilden.

4. Lager nach einem der Ansprüche 1 bis 3,
**dadurch gekennzeichnet,**
**dass** die Rollorgane Kugeln sind und dass die Lagerfläche (21, 31, 42, 52) jedes Ringes (2, 3, 4, 5) in etwa die Form eines viertel-oder eines halben Torus aufweist, zur Abgrenzung wenigstens einer Kavität zur Aufnahme der Rollorgane (7, 7') und zwar in der koaxialen Stellung der Ringe.

5. Lager nach einem der Ansprüche 1 bis 4,
**dadurch gekennzeichnet,**
**dass** die Lagerflächen (21, 31), die eine Lagerbahn mit wellenförmigem Profil bilden, im allgemeinen sinusförmig, bei jedem Ring identisch sind.

6. Lager nach einem der Ansprüche 1 bis 5,
**dadurch gekennzeichnet,**
**dass** mindestens eine der Lagerflächen (21, 31), die eine Bahn mit wellenförmigem Profil bildet, n Wellen darstellt, mit einer axialen Komponente, wobei die Wellen eine Winkelsymmetrie mit einem Winkel 2 π /n um besagte Rotationsachse des Lagers aufweisen, und die Rollorgane (7, 7') die gleiche Anzahl aufweisen, wie die Zahl n der Wellen oder eines Teils innerhalb dieser Zahl, wobei die Rollorgane (7, 7') derart versetzt sind, dass sie im gleichen Winkel um die Rotationsachse (XX') des Lagers (1) angeordnet sind.

7. Lager (1) nach einem der Ansprüche 1 bis 6,
**dadurch gekennzeichnet,**
**dass** die relative Winkelposition des ersten und dritten Rings (2, 3) die mit der Lagerfläche (21, 31) mit Wellenprofil ausgestattet sind, regelbar ist durch die Winkelversetzung dieser Ringe einer gegen den anderen, entweder manuell oder durch den Einsatz eines motorischen Mechanismus (15, 16), der einen der Ringe gegenüber dem anderen in Rotation versetzt, um die Regelung der Amplitude der axialen Bewegungen zu erlauben.

8. Lager nach einem der Ansprüche 1 bis 6,
**dadurch gekennnzeichnet,**
**dass** der erste und dritte Ring, die mit der wellenförmig profilierten Lagerfläche versehen sind, einer gegen den anderen winkelversetzbar sind und dass einer (3) der Ringe (2, 3), der mit einer wellenförmig profilierten Lagerfläche versehen ist, visuelle Marken seiner Winkelposition aufweist, entweder gegenüber dem anderen Ring (2) mit einer wellenförmig profilierten Lagerfläche (21) oder gegenüber einer externen Referenz am Lager, an welche das Lager angekoppelt ist.

9. Lager nach einem der Ansprüche 1 bis 8,
**dadurch gekennzeichnet,**
**dass** es mindestens drei Ringe (2, 3, 4, 5) aufweist und zwei Käfige für die Rollelemente, die winkelversetzbar eines gegen das andere ist, um die Regelung der Amplitude der Axialbewegungen zu erlauben.

10. Formwerkzeug wie Bohrer, Fräse, Schrauber des Typs, das eine Werkzeugaufnahme (9) aufweist, welche durch einen Motorblock (8) in Rotation versetzt wird, der mit ihm in einheitlicher Rotation ist,
**dadurch gekennzeichnet,**
**dass** die Werkzeugaufnahme (9) mittels des Motorblocks (8) mit einer hin- und hergehenden axialen Bewegung beaufschlagbar ist, mit einer regelbaren Amplitude unabhängig von der Frequenz mittels eines Lagers (1) wie es durch einen der Ansprüche 1 bis 9 angegeben ist und das zwischen dem Motorblock (8) und der Werkzeugaufnahme (9) zwischen geschaltet ist.

11. Formwerkzeug nach Anspruch 10,
**dadurch gekennzeichnet,**
**dass** es Anzeigeelemente eines Ringes mit einer wellenförmig profilierten Lagerfläche aufweist in Beziehung auf einen anderen Ring mit einer wellenförmig profilierten Lagerfläche oder bezüglich des Motorblocks (8).

12. Formwerkzeug nach einem der Ansprüche 10 und 11,
**dadurch gekennzeichnet,**
**dass** es mindestens ein Mittel (18) zum Messen der Amplitude der hin- und hergehenden Translationsbewegung der Werkzeugaufnahme (9) aufweist und ein Mittel (15, 16) zur Bestimmung der relativen Winkelposition der Ringe mit der wellenförmig profilierten Lagerfläche als Funktion der durch das oder die Mittel (18) zur Messung bestimmten Amplitude.

13. Formwerkzeug nach einem der Ansprüche 10 - 12, wobei das Lager (1) des Typs ist, dass es vier Ringe (2, 3, 4, 5) aufweist, sowie zwei innere Ringe (4, 5) und zwei äussere Ringe (2, 3), sowie zwei Reihen von Rollorganen (7, 7') welche in Rotation verbunden sind, und der Motorblock (8) einen der inneren Ringe (4) in Rotation versetzt,
**dadurch gekennzeichnet,**
**dass** eine Abstützung für Kugeln (30) zwischen dem anderen inneren Ring (5) des Lagers (1) und dem Motorblock (8) vorgesehen ist.
